(19)

Europäisches
Patentamt

European
Patent Office

Office européen
des brevets

(11) **EP 4 564 056 A1**

(12) **EUROPEAN PATENT APPLICATION**

(43) Date of publication:
04.06.2025 Bulletin 2025/23

(21) Application number: 23212929.6

(22) Date of filing: 29.11.2023

(51) International Patent Classification (IPC):
*G01S 13/34* (2006.01)     *G01S 13/58* (2006.01)
*G01S 13/60* (2006.01)     *G01S 13/89* (2006.01)
*G01S 13/931* (2020.01)

(52) Cooperative Patent Classification (CPC):
G01S 13/931; G01S 13/345; G01S 13/584;
G01S 13/60; G01S 13/89

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **Provizio Limited**
**V14 WV82 Shannon Clare (IE)**

(72) Inventor: **The designation of the inventor has not yet been filed**

(74) Representative: **Purdylucey Intellectual Property**
**23 Ely Place**
**Dublin 2 D02 N285 (IE)**

(54) **SYSTEM AND METHOD OF IMPLEMENTING ODOMETRY USING RADAR POINT CLOUD REGISTRATION**

(57)     Disclosed is a method for estimating angular movement of an ego-vehicle. The method includes measuring and recording radar point clouds of observed detections of static points from consecutive frames, transforming the radar point cloud from a previous frame to that of a current frame using a transformation matrix, to generate a transformed point cloud, wherein the radar point cloud of the current frame is a current point cloud, converting the transformed point cloud and the current point cloud to corresponding images with pixels that have a signal-to-noise level greater than a predefined level, comparing the images with their differences numerically evaluated, to generate a first error function, adjusting a rotation angle in the transformation matrix till the first error function is minimized, and estimating an inter-frame rotation angle between the consecutive frames, based on the minimized first error function.

Radar Point Cloud

**FIG. 1**

EP 4 564 056 A1

## Description

### Field

The present invention relates to a method of using radar point clouds to estimate angular movement of a vehicle, and more particularly to estimating velocity and yaw rate of an ego-vehicle, and thereby position through dead-reckoning.

### Background of Invention

Detections of radars of all types are often displayed in the form of a 'point cloud' or dataset that represents the detected objects in space. In such a display, an individual point represents the X, Y, and Z geometric coordinates, plus velocity, of a single detected radar reflection, and when all detections are collated together into a point cloud, a means is provided for collating many of these individual detections into a dataset that can be graphically displayed.

**Error! Reference source not found,** shows a typical radar point cloud output using the ISO 8855 coordinate system. Various modulation schemes for MIMO radars exist which aim to achieve orthogonality between the signals transmitted by each individual transmitter, such that they can be separated out on the receiver side. These include, but are not limited to, Time Division Multiplex (TDM), Frequency Division Multiplex (FDM), Binary Phase Modulation (BPM) and Doppler Division Multiple Access (DDMA). For the most common case of TDM MIMO, the transmitters sequentially transmit a signal one at a time, meaning that the receive elements receive signals originating from each of the transmitters sequentially in time, which can thereby be separated according to which transmitter the signal originated from.

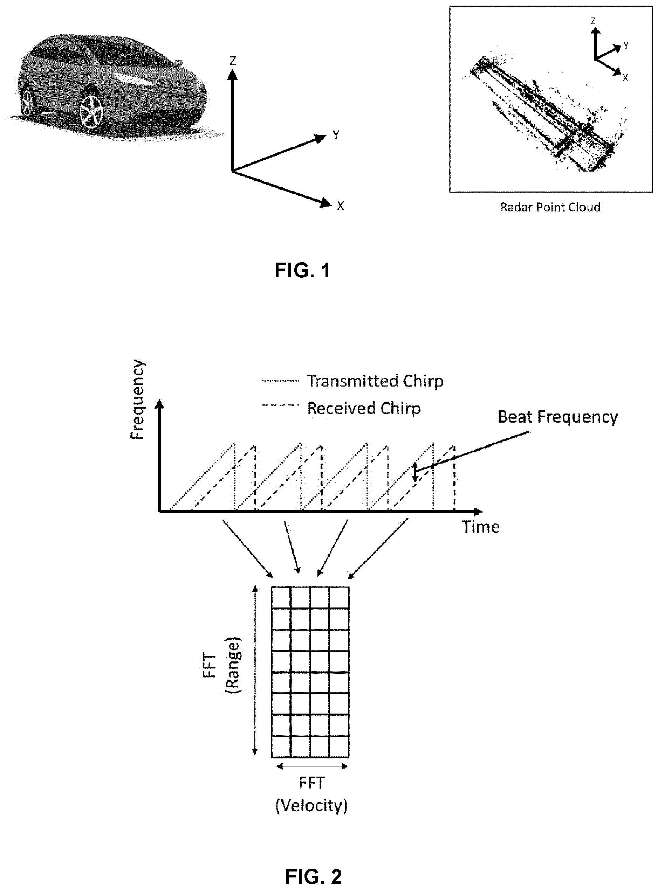

FIG.2 describes Frequency Modulated Continuous Wave (FMCW) modulation which again is a common type of modulation and would be known to those familiar with the field, although other types of modulation may be used. An FMCW waveform, also referred to as a chirp, is a complex sinusoidal waveform whose frequency increases linearly with time. FMCW radars transmit chirps in a periodic fashion, at a period referred to as the pulse repetition interval (PRI) and most commonly in a sawtooth configuration, although other chirp types are available. The resulting target echo from the scene will contain a delayed and attenuated copy of the transmitted chirp. By mixing the received signal with the transmitted chirp, a complex sinusoidal waveform will result. This waveform is known as the beat signal and its frequency is proportional to the distance to the detected object. Multiple chirps are collected within a single 'frame', which thereby allows determination of doppler frequency changes in the 'slow time' dimension (for velocity determination), and it is these object detections of a frame that are often displayed in a point cloud.

The estimation of the beat frequency is usually implemented in the digital domain, after the beat signal has been digitally sampled. Since the beat frequency is much smaller than the radar bandwidth, a low-speed analogue-to-digital converter (ADC) can be used. By sampling the beat signal and placing the samples for each chirp into separate columns of a matrix, the row indices of the matrix will correspond to the 'fast' time taken across a single chirp and the column indices will correspond to the 'slow' time taken across multiple chirps. By employing a Fast Fourier Transform (FFT) in each column of the matrix, the range of the object is determined through detection of the beat frequency, and by applying a further FFT along the rows of the matrix, the velocity of the object can be determined through detection of the doppler frequency. The use of these two FFTs is commonly named a 2D FFT and allows objects to be determined in both range and velocity. A concomitant benefit of performing the 2D FFT is that it lowers the noise floor or 'background' noise through matched filtering of the object's beat and doppler frequencies. Evidently, the number of objects that fall into the same range-velocity bin will typically be small in number, depending on the range and velocity resolution of the radar.

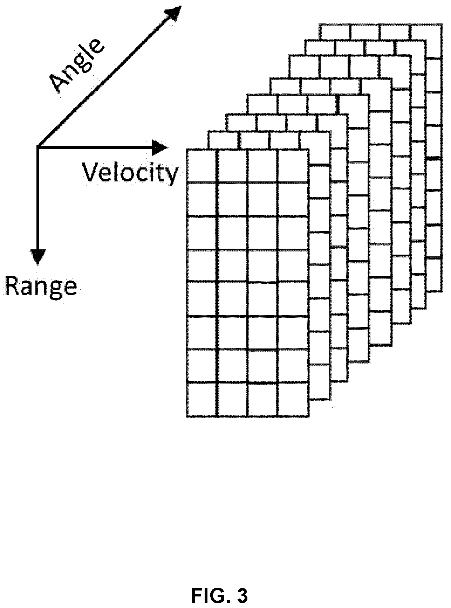

While the range-velocity plot gives a lot of useful information, it lacks detail on object angular position. FIG.3 illustrates taking instantaneous range-velocity plots at each of the receive ports (including those both real and virtual) and performing a 3rd 'angle' FFT or 3D FFT. Note that this typically occurs following on from the Constant False Alarm Rate (CFAR) thresholding step, whereby only bins with a Signal-to-Noise (which is the difference of the signal level received by the radar and the background noise) that exceeds a certain threshold are retained. This removes a lot of clutter that would otherwise be present in point cloud displays.

It is intuitively obvious that the interpretation of such point cloud displays relies not only on the accurate measurement of the detection points by the radar but also on the measurement, relative to a reference position and angle, of the position of the radar on the vehicle and the angle that it is pointing in - a process known as extrinsic calibration - otherwise the point cloud output would not be representative of the visual scene. This is particularly noticeable at longer distances as angle errors in the polar angle measurement provided by the radar become more pronounced at long-range when translated to the cartesian coordinate system.

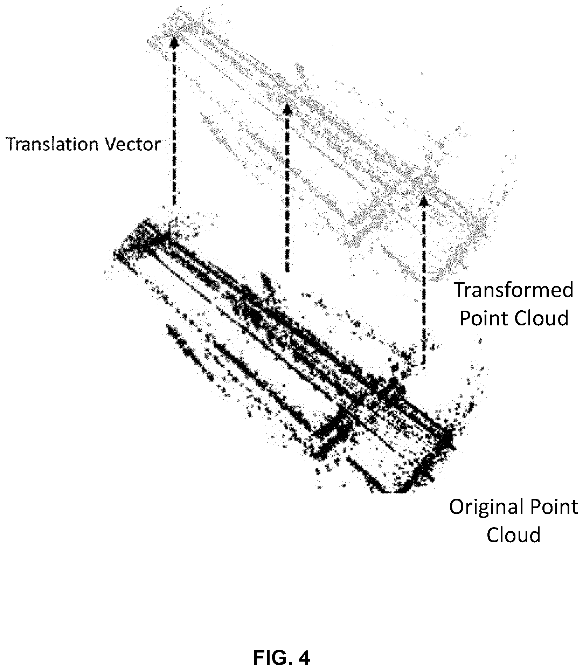

FIG.4 illustrates the process of point cloud or point set registration and is the process of finding a transformation in space (i.e., by translation and/or rotation) that aligns two point clouds. In essence, if two, or more point clouds are measured using the same sensor at closely spaced but different times during the motion of an ego-vehicle, then by transforming the second point cloud onto the first or vice versa, the calculated translation and rotation values may be used to determine the velocity of the ego-vehicle and change in heading angle, or yaw rate, of the ego-vehicle, respectively.

Alternatively, in systems with multiple sensors, point cloud registration may be used for calculation of sensor extrinsic positions and angles, without requiring measurement of extrinsic values for every sensor, thereby enabling merging of multiple datasets, which have their own coordinates aligned to each sensor, into a single coordinate system. Point cloud registration therefore may be used in autonomous driving systems for applications such as ego-vehicle motion estimation and simultaneous localisation and mapping (SLAM), among others.

The velocity of the ego-vehicle may be calculated using several means, for instance via readings from in-car sensors through the CAN bus, the doppler shift in the radar data or from the GNSS measurement of velocity. The yaw rate of the ego-vehicle is, by definition, the rate of change of the vehicle's heading angle measured in degrees per second, or radians per second, of rotation about a vertical axis through the vehicle's centre of gravity. It may be calculated using a yaw-rate sensor, which is a gyroscopic device that measures a vehicle's yaw rate, or by using GNSS heading measurements. To calculate the heading using GNSS requires a GNSS system that has two GNSS antennas.

There may be times when the ego-vehicle velocity/yaw rate sensors are either unavailable or faulty or the ego-vehicle may be in areas where GNSS reception is unavailable, such as when travelling through tunnels or in an urban canyon, where the view of the sky is restricted. Having a single-point-of-failure or environments in which key features don't work is not permitted for autonomous or assisted driving applications, hence having another means to calculate the ego-vehicle velocity and yaw rate offers redundancy to the existing sensor setup on the vehicle and improved robustness for operation in all environments.

Point cloud registration is one such method of calculating ego-vehicle velocity and yaw rate. Due to a lack of absolute position measurements, it does mean that 'dead reckoning' must be employed. Dead reckoning is the process of calculating the current position of a moving object, by using a previously determined position, and incorporating estimates of velocity, direction (or angle), and elapsed time. The dead-reckoning method is valid for use in accumulating stationary point cloud detections over a short period of time, for instance over a period of several seconds, for the purpose of autonomous driving or robotics applications such as free space detection and occupancy grid mapping, which aim to determine the unoccupied areas of space in front of the ego-vehicle, such that collisions may be avoided.

There are several prior art methods of calculating yaw angle and movement based on the readings from a radar point cloud, but all have inherent disadvantages, and in some cases, rely on an extremely accurate extrinsic measurement. One such method includes the Fourier-Mellin Transform, which is often used in the context of visual images (in this case the images are consecutive point cloud images) and their alignment using translation, rotation angle, and scale factor. It therefore requires a significant computational overhead for real-world applications, which is often impractical for making real-time yaw rate calculations.

Another solution includes Registration with Existing Radar Maps. These systems register a current radar point cloud, or window of several radar point clouds, with an existing radar point cloud-based map, which may have been obtained over multiple vehicle passes. A major drawback of this approach is the need for prior maps to have been generated, which may be time-consuming, while also requiring real-time computation. Furthermore, to accumulate radar point clouds over time and thereby improve robustness of this approach, other sensors, such as IMU and GNSS, are commonly used, which adds cost and reduces reliability in cases where these sensors are not producing reliable data.

Yet another solution includes feature extraction and iterative closest surface point. This method uses filtering to extract key features of the radar point cloud through only keeping the strongest range returns for each Azimuth angle, calculating surface points and normals from the filtered point cloud and then registering with closest surface points and normals in location and angle within a sliding window of previous point cloud frames. This method requires no existing map data and can be operated at a relatively high frame rate, however for best performance, parameters need to be optimised for the specific radar sensor parameters and environment.

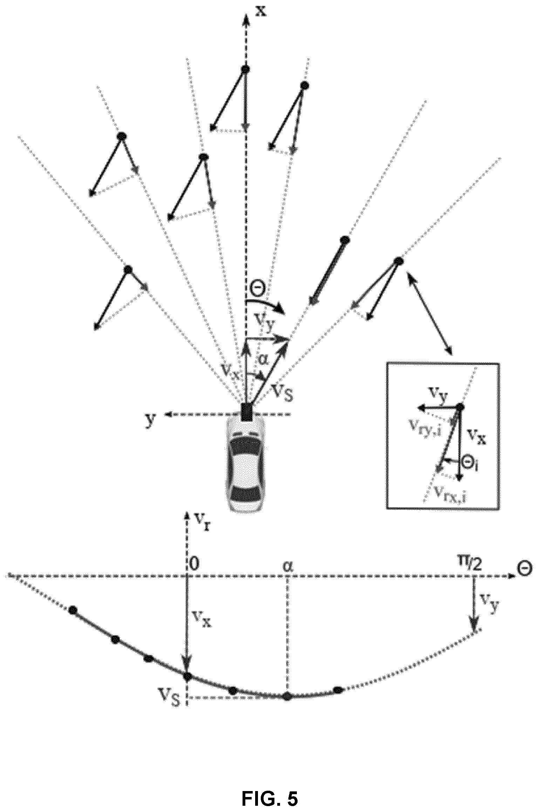

Yet another solution includes Instantaneous Ego-Motion Estimation using Doppler Radar. Figure 5 shows this method, where the sinusoidal relationship between the radial velocity and azimuth angle of radar point cloud detections from stationary objects is used to enable the ego-vehicle velocity and yaw rate to be determined. If a radar sensor is moved from its point of view, from the perspective of the radar all stationary targets move in the opposite direction to that of the radar. The velocity relative to the radar of the stationary targets may be calculated using the sensor's velocity and heading direction. However, it is not possible to directly extract the velocity vectors of the targets as a Doppler radar can only measure the radial velocity component. For that reason, it is necessary to reconstruct the sensor velocity ($v_s$) and heading direction ($\alpha$) from at least two detected stationary targets. While the sensor velocity may be accurately extracted using this method, it is further noted that the extrinsic parameters, or mounted position and angle of the radar on the ego-vehicle, needs to be precisely known with reference to a fixed point on the vehicle, for this method to provide an accurate heading direction. Yaw rate estimates are therefore very sensitive to errors in this measurement.

Yet another solution includes using range-azimuth static heatmaps for estimating angular movement of an ego-vehicle. The range-azimuth static heatmap shows the magnitude of the receive signal from static targets in each range/azimuth bin and therefore has number of pixels equal to the product of the number of range bins and the number of azimuth bins. However, images generated based on static heat maps include noise and side lobes. The range-azimuth static heatmap shows the magnitude of the receive signal from static targets in each range/azimuth bin and therefore has number of pixels equal to the product of the number of range bins and the number of azimuth bins. Also, generation of the heat maps requires more extensive processing due to a greater number of azimuth angle FFTs needing to be performed, which adds a significant computation time. In addition, the choice of the representative pixels to use in making translation or rotation estimates can significantly affect the calculation outcome.

Therefore, there is evidently a need for an algorithm that can calculate the angular position and movement of an ego-vehicle in a computationally efficient way, without requiring accurate extrinsic information, and with more accurate yaw rate estimation.

### SUMMARY OF INVENTION

In one aspect, there is provided a method for estimating angular movement of an ego-vehicle. The method includes measuring and recording radar point clouds of observed detections of static points from a pair of consecutive frames including a previous and a current frame, transforming the radar point cloud from the previous frame to that of the current frame using a transformation matrix, to generate a transformed point cloud, wherein the radar point cloud of the current frame is a current point cloud, converting the transformed point cloud and the current point cloud to corresponding images with pixels that have a signal-to-noise level greater than a predefined level, comparing the images with their differences numerically evaluated, to generate a first error function, adjusting a rotation angle in the transformation matrix till the first error function is minimized, and estimating an inter-frame rotation angle between the consecutive frames, based on the minimized first error function.

In an embodiment of the present invention, the transformation matrix includes a single variable as yaw angle or rotation angle about the z-axis, by setting the displacement of the ego-vehicle along x and y axes, in terms of frame rate, detected velocity of the ego-vehicle, and yaw or rotation angle about the z-axis.

In an embodiment of the present invention, the method includes further translating the transformed point cloud using a second transformation matrix, wherein the second transformation matrix includes a single variable as pitch angle or rotation about the y-axis, by setting the displacement of the ego-vehicle along x and z axes, in terms of the frame rate, detected velocity and pitch angle or rotation about the y-axis; converting the further transformed point cloud and the current point cloud to corresponding images with pixels that have a signal-to-noise level larger than a predefined level; comparing the images with their differences numerically evaluated, to generate a second error function; minimising the second error function by adjusting the pitch angle or rotation angle about the y-axis for the estimated pitch angle; and estimating the pitch angle or rotation about the y-axis based on the minimized second error function.

In an embodiment of the present invention, the magnitude of the difference between the pixels of two images are summed to generate first or second error functions.

In an embodiment of the present invention, the transformation matrix is generated based on two variables of pitch and yaw angles, and the first error function includes a 2-dimensional error matrix that is minimized by adjustment of both the yaw and pitch angles.

In an embodiment of the present invention, the displacements in x, y and z axes in the transformation matrix are set in terms of the frame rate, yaw angle, pitch angle and detected velocity.

In an embodiment of the present invention, an offset number k of frames is used and k is greater than 1.

In an embodiment of the present invention, the method includes applying a digital filter to the transformed point cloud or further transformed point cloud to reduce the point cloud noise.

In an embodiment of the present invention, the detected velocity is the unambiguous velocity.

In an embodiment of the present invention, the rotation angle is one of: pitch angle or yaw angle.

In another aspect of the present invention, there is provided a system for estimating angular movement of an ego-vehicle. The system includes a memory to store one or more instructions, and a processor to execute the one or more instructions to: measure and record radar point clouds of observed detections of static points from consecutive frames; transform the radar point cloud from a previous frame to that of a current frame using a transformation matrix, to generate a transformed point cloud, wherein the radar point cloud of the current frame is a current point cloud; convert the transformed point cloud and the current point cloud to corresponding images with pixels that have a signal-to-noise level greater than a predefined level; compare the images with their differences numerically evaluated, to generate a first error function; adjust a rotation angle in the transformation matrix till the first error function is minimized; and estimate an inter-frame rotation angle between the consecutive frames, based on the minimized first error function.

Various embodiments of the present invention use point cloud measurements from an automotive radar, over consecutive or a fixed number of frames, to calculate the transformation parameters required to map the points acquired from the first frame onto those acquired from the second frame. The transformation parameters are thereafter used to estimate yaw rate and movement from the radar point cloud. The present invention works with any imaging radar point cloud and is more robust as only detection peaks are examined. Also, the method and system of the present invention eliminates the need of using static radar heatmaps.

Embodiments of the present invention eliminate the need of a GNSS receiver or alternative in a sensor system

## EP 4 564 056 A1

that uses ego-vehicle velocity and yaw rate for the purpose of free-space detection or occupancy grid mapping only, i.e., where absolute position measurements are not required, as accumulation of stationary target detections over several frames (for instance over 250 to 500 milliseconds duration). They provide an ability to track location when underground or in built up areas where GNSS satellite visibility is limited, thereby offering redundancy to other sensor systems on the ego-vehicle, and reduced reliance on the accurate extrinsic calibration of sensors in the calculation of ego-vehicle yaw rate, as this parameter is removed from the calculation. This is due to the method relying only on a relative change between frames, hence the effect of an inaccurate extrinsic calibration is removed from ego-vehicle yaw rate and dead reckoning location calculations. Also, as the transformation matrix contains a single unknown variable (the inter-frame rotation angle), optimisation errors in the rotation angle calculation are reduced relative to prior art yaw methods of yaw rate calculation, the yaw rate calculation can be completed more quickly and there is less parameter optimisation to perform when compared to prior art methods.

The invention can be used in any radar system, including those for applications such as defence or warfare, but is more specifically applicable for automotive applications. It is noted that in these applications, the pitch movement is small or non-existent, so the pitch extension calculation may not be required.

There is also provided a computer program comprising program instructions for causing a computer program to carry out the above method which may be embodied on a record medium, carrier signal or read-only memory.

## BRIEF DESCRIPTION OF DRAWINGS

The present invention will be more clearly understood from the following description of embodiments thereof, given by way of example only, with reference to the accompanying drawings, in which:

**Error! Reference source not found,** shows a typical radar point cloud output using the ISO 8855 coordinate system;
**Error! Reference source not found,** shows the FMCW radar chirps and the resulting range and velocity estimations performed using a 2D FFT;
**Error! Reference source not found,** shows a further angle-of-arrival processing on the range and velocity domain over all receivers to calculate angle;
**Error! Reference source not found,** shows an illustrative example of point cloud registration;
**Error! Reference source not found,** shows a prior art method of estimating sensor velocity from the radar point cloud;
**Error! Reference source not found,** shows a representative figure for Kellner's method of calculating the ego-motion of a vehicle from the estimated sensor velocity;
**Error! Reference source not found,** is a flowchart illustrating a method of estimating angular movement of an ego-vehicle between consecutive frames, in accordance with an embodiment of the present invention;
**Error! Reference source not found,** shows how the displacement components in X and Y can be derived; and
**Error! Reference source not found,** shows how the pitch angle of the radar sensor can affect the point cloud displacement.

## DETAILED DESCRIPTION OF THE DRAWINGS

FIG.5 illustrates the sinusoidal relationship between the measured radial velocity (calculated in the 2D FFT step) and azimuth angle (calculated in the 3D FFT step or subsequent angle processing step) of the stationary radar point cloud detections. The detections from dynamic targets, multipath or low SNR targets may not be located on this trendline, hence a clustering technique such as RANSAC (Random Sample Consensus) or DBSCAN (Density-Based clustering) may be used to only retain stationary points. A numerical method such as the least squares algorithm may be used to calculate the x and y components of the sensor velocity based on the radial velocity, $v_r$, and azimuth angle, $\Theta$, of each of the N stationary points:

$$\begin{pmatrix} v_{r1} \\ ... \\ v_{rN} \end{pmatrix} = \begin{pmatrix} cos(\theta_1) & sin(\theta_1) \\ ... & ... \\ cos(\theta_N) & cos(\theta_N) \end{pmatrix} \begin{pmatrix} v_x \\ v_y \end{pmatrix} \qquad \dots\dots\dots\dots \qquad (1)$$

The sensor velocity magnitude, $v_s$, and angle, $\alpha$, may then be calculated as shown below, where $r_d$, the relative radar direction, is equal to 1 for a forward-facing radar and -1 for a backward-facing radar.

$$v_s = \sqrt{\left(v_x{}^2 + v_y{}^2\right)} \qquad \cdots\cdots\cdots \qquad (2)$$

$$\alpha = sin^{-1}\left(-r_d \times v_y/v_s\right) \qquad \cdots\cdots\cdots \qquad (3)$$

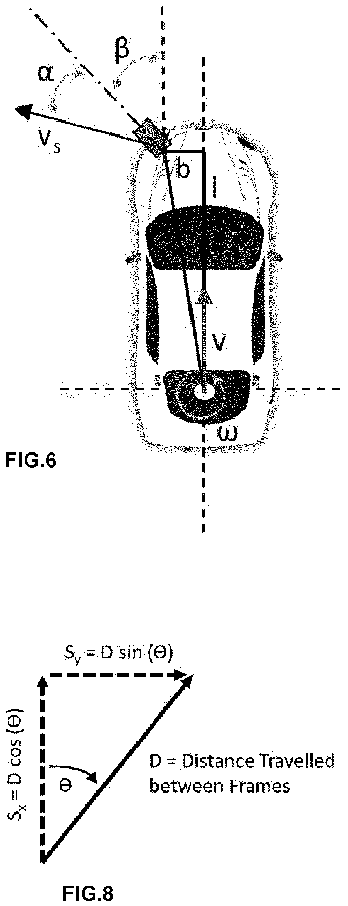

FIG.6 illustrates the location of the radar relative to the ego-vehicle's rear axle (b and I) and the radar mounting angle (β) are also used in calculating the ego-vehicle velocity and yaw rate from the sensor velocity magnitude/ angle meaning that an accurate extrinsic calibration is needed. This is a significant disadvantage in practice for calculating the ego-vehicle yaw rate as even small variations in the extrinsic parameters (β, b or I) can lead to large errors. Typically for a forward-facing radar, the ego-vehicle velocity calculation is less affected by extrinsic parameter errors since the forward-facing radar is typically aligned with the centre of the rear-axle, meaning that the value of b in equation (4) is close to zero and the value of alpha and beta are typically close to zero degrees also. Hence, the sensor velocity and ego-vehicle velocity are very similar in most cases for a forward-facing radar.

To enable dead-reckoning to be employed to calculate position change in the absence of positional measurements, an accurate estimate of the ego-vehicle's velocity and heading must be made. In the absence of any other positional information (due to the loss of a GNSS signal etc.), this must be derived from sensor measurements.

The calculated sensor velocity and angle can be used with the Ackerman condition (which assumes that there is no wheel drift and thus the velocity of the rear axle contains only an orthogonal part) to calculate the ego-motion of the vehicle, i.e., the velocity and yaw rate, according to following equations:

$$v = \left(cos(\alpha + \beta) - \frac{b}{l}sin(\alpha + \beta)\right)v_s \qquad \cdots\cdots \qquad (4)$$

$$\omega = \frac{sin(\alpha+\beta)}{l}v_s \qquad \cdots\cdots\cdots \qquad (5)$$

The detected velocity is the unambiguous velocity and is calculated from a small phase change in the returned signal. Trigonometry functions obviously give the same value if calculated at e.g. 360/720 etc. degrees. An ambiguous velocity could be the velocity recovered from a number of these different phases.

**Error! Reference source not found,** is a flowchart illustrating a method of estimating angular movement of an ego-vehicle between consecutive frames, in accordance with an embodiment of the present invention.

At step 702, radar point clouds are measured and recorded from observed detection peaks of stationary points from a known number of consecutive or latest frames. If dead reckoning for location tracking is being employed, the last known location measurement (from a GNSS receiver) is recorded, otherwise an arbitrary location starting point is chosen. It is to be noted that the detection points for dynamic, or moving objects, are removed / ignored from the point cloud(s). As points from dynamic or moving objects are removed, the changes in the point cloud are only due to changes in the viewpoint of the radar relative to the static points in the scenes. The removal of the dynamic points means that the change in viewpoint can only be due to the motion and yaw turn of the ego-vehicle.

It is noted that these point clouds would be typical of the outputs from an automotive radar that have been fully processed using digital signal processing. Since such point clouds only contain detection information above a pre-defined threshold, a static heat map (which is a graphical display or image of all information with all signal levels in the scene usually represented by a colour scale) cannot be formed and the calculations in the described invention are quicker due to redundant information not being present in the point cloud. Furthermore, the described invention is therefore applicable to all automotive radar outputs and is not reliant on the ability to access lower-level detection data.

At step 704, the point cloud from a known earlier frame is transformed to that of the current frame using a transformation matrix with a given rotation angle. The transformation matrix is applied to the X, Y and Z coordinates of the radar point cloud from a previously captured frame, to generate a transformed point cloud. The point cloud of a current frame is hereinafter referred to as current point cloud. In an embodiment of the present invention, the transformation matrix is a 3D affine transformation matrix that is generated for static points in the point cloud using an unknown rotation angle, known frame rate and calculated ego-vehicle velocity.

When using point clouds to estimate the ego-vehicle's movement, it is well known in the field that any combination of rotation, scaling or translation of points can be represented by a 4 x 4 affine transformation matrix of the form:

$$\begin{bmatrix} x' \\ y' \\ z' \\ 1 \end{bmatrix} = T \begin{bmatrix} x \\ y \\ z \\ 1 \end{bmatrix} \qquad \ldots\ldots\ldots\ldots \qquad (6)$$

where

$$T = \begin{bmatrix} a_{11} & a_{12} & a_{13} & a_{14} \\ a_{21} & a_{22} & a_{23} & a_{24} \\ a_{31} & a_{32} & a_{33} & a_{34} \\ 0 & 0 & 0 & 1 \end{bmatrix} \qquad \ldots\ldots\ldots\ldots\ldots\ldots(7)$$

In this affine transformation matrix, rotation and scaling is accounted for by the 3 x 3 sub-matrix $a_{11}$ to $a_{33}$, with spatial translations being accounted for by coefficients $a_{14}$, $a_{24}$, and $a_{34}$. In this respect, the coefficient values of the matrix T are calculated from the full transformation sequence of rotation followed by translation. Note, that the order of the transformation sequence matters, i.e., a rotation followed by translation may generate different results from a translation followed by rotation. Also, for transformation matrices written in a sequence from left to right, the transformations are applied from right to left. Therefore, an input vector appears on the right side and the sequence of transformations operates in reverse order (from right to left) - to first rotate (matrix R) and then translate (matrix S) a vertex v, one would write u = S*R*v.

It is assumed that the change in pitch, or vertical rotational angle between frames is negligible given the high-frame rate of automotive radars (typically 20 FPS), and thus only two transformations are considered between frames - rotation (the yaw angle due to the ego-vehicle turning) and translation (due to movement of the ego-vehicle). Furthermore, since the 3D transformation matrices for rotation (about the z-axis) and translation are already known, the combined transformation matrix T can be calculated using matrix multiplication.

It is well known that the transformation matrix for a rotation around the z-axis is:

$$R_z = \begin{bmatrix} cos(\theta) & -sin(\theta) & 0 & 0 \\ sin(\theta) & cos(\theta) & 0 & 0 \\ 0 & 0 & 1 & 0 \\ 0 & 0 & 0 & 1 \end{bmatrix} \qquad \ldots\ldots\ldots\ldots\ldots.(8)$$

where $\Theta$ is in radians and is rotation angle around z-axis.

Likewise, it well known that a spatial translation matrix takes the form:

$$S = \begin{bmatrix} 1 & 0 & 0 & S_x \\ 0 & 1 & 0 & S_y \\ 0 & 0 & 1 & S_z \\ 0 & 0 & 0 & 1 \end{bmatrix} \qquad \ldots\ldots\ldots\ldots\ldots\ldots\ldots(9)$$

Thus, the combined affine transformation matrix, $T_z$, used in this embodiment is formed by the multiplication of the two previous matrices, and becomes:

$$T_z = S * R = \begin{bmatrix} cos(\theta) & -sin(\theta) & 0 & S_x \\ sin(\theta) & cos(\theta) & 0 & S_y \\ 0 & 0 & 1 & S_z \\ 0 & 0 & 0 & 1 \end{bmatrix} \qquad \ldots\ldots\ldots\ldots\ldots\ldots(10)$$

where the form of this matrix is seen to align with the prior art knowledge of the sub-matrix $a_{11}$ to $a_{33}$ relating to rotational transformations, with spatial translations being accounted in coefficients $a_{14}$, $a_{24}$ and $a_{34}$.

The problem is therefore reduced to 4 unknowns $\Theta$, $S_x$, $S_y$ and $S_z$, and which is further reduced to 3 unknowns as there will be no significant shift in height between frames, given the short inter-frame time, making the coefficient $S_z = 0$.

The coefficients $S_x$ and $S_y$ which are the displacements or shifts in the XY plane, can also be written in terms of $\Theta$,

according to the vector diagram shown in **Error! Reference source not found.**:

$$S_x = D\,cos(\theta) \qquad \dots\dots\dots\dots\dots\dots\dots\dots\dots\dots\dots\dots\dots\dots\dots(11)$$

$$S_y = D\,sin(\theta) \qquad \dots\dots\dots\dots\dots\dots\dots\dots\dots\dots\dots\dots(12)$$

where D is the distance travelled by the ego-vehicle between frames and which can be rewritten in terms of the ego-vehicle velocity, v, and the time taken between frames, tf:

$$D = v \times t_f \qquad \dots\dots\dots\dots\dots\dots\dots\dots(13)$$

The time taken between comparison frames is a known quantity from the radar modulation scheme and is often quoted as the frame rate (FPS). Note that here this is generalised to the inter-frame rate as comparison may be made between the current frame and one of a window of previous frames, with the difference in frames equal to Nf, for instance if comparison is being made between frame number 900 and 895 then $N_f = 5$.

$$FPS_I = \frac{FPS}{N_f} \qquad \dots\dots\dots\dots\dots\dots\dots\dots(14) \qquad\qquad 6$$

6

$$D = \frac{v}{FPS_I} \qquad\qquad\qquad \dots\dots\dots\dots\dots\dots\dots.(15)$$

By using equations (14) and (15) in equation (10), the following transformation matrix is obtained:

$$T_z = \begin{bmatrix} cos(\theta) & -sin(\theta) & 0 & -\frac{v}{FPS_I}cos(\theta) \\ sin(\theta) & cos(\theta) & 0 & -\frac{v}{FPS_I}sin(\theta) \\ 0 & 0 & 1 & 0 \\ 0 & 0 & 0 & 1 \end{bmatrix} \qquad \dots\dots\dots\dots(16)$$

As noted previously, an accurate estimate of the ego-vehicle velocity can be obtained from the prior art methods, such as that of Kellner et al, whereby the ego-car velocity may be extracted from the trendline of radial velocity versus azimuth angle detections in the point cloud, shown in **Error! Reference source not found.**. Given that the frame rate is a known quantity, the yaw rate between frames can be determined and therefore yaw rate in radians per second can be calculated.

In an embodiment of the present invention, the transformation matrix is dependent on only one unknown variable, i.e., yaw angle Θ. It is also noted that the parameters of equation (16) are independent of the mounting angle or the reference coordinate system, and only relies on the relative changes between measurements taken from the same sensor over a period of time, provided the mounting position and angle of the sensor are unchanged within this time. This means that the reliance on the accuracy of the extrinsic calibration (one of the most restricting factors of existing methods) is removed.

The point cloud from a previous frame, or a fixed offset number of earlier frames, may be transformed to the transformed point cloud according to the transformation matrix of equation (16), using the previously calculated or recorded values for velocity (v) and inter-frame rate (FPS$_I$). FPS$_I$ is equal to the frame rate divided by the offset number of frames used. For instance, if a comparison is made between the current frame and the previous frame the values of FPS and FPS$_I$ would be equal, but if comparison is made between the current frame and five frames previous, FPS$_I$ would be one fifth of FPS.

In the transformation matrix as illustrated in the equation (16), an initial value of the rotation angle Θ may be chosen based on the maximum angular rotation that is realistic within the inter-frame time - note that this may also be refined based on calculated rotation angle values from previous frames. In an example, a typical starting value for the inter-frame rotation angle, Θ, is -3 degrees. The value used depends on the maximum expected angular velocity magnitude in degrees per frame that is expected.

At step 706, the transformed point cloud and the current point cloud are converted to transformed and current images respectively, with pixels only registered that have a signal-to-noise level larger than a predefined level. In an embodiment, an identical number of pixels are present in each image, for instance 256 x 256. This conversion to image form is made by performing a grid-search to find detections that are within pre-defined pixels. The pixels that contain detections are set to the sum of the signal-to-noise ratio in dB for these detections while pixels that do not are set to 0 dB. In this way, further redundant information is removed from the images in addition to that already removed by the digital signal processing of the detection data.

At step 708, the transformed and current images are compared and their differences are numerically evaluated, to generate an error function. The correspondence between transformed and current point clouds is determined by comparing these images and is given a value in the form of an error function. A variety of methods exist to calculate this error and can include calculating the difference between corresponding pixel magnitudes in the transformed and current point clouds or alternatively on a multiplication of the corresponding pixel magnitudes in the transformed and current point clouds.

At step 710, it is checked if the error function is minimum. The error function may be minimized by adjustment of the rotation angle in the transformation matrix. The rotation angle is one of yaw angle or in other embodiments, the pitch angle.

At step 712, the rotation angle is adjusted and the process restarts from step 704 for the transformation matrix with adjusted rotation angle. Several approaches can be taken to find the value for Θ for which the minimum error function value occurs. One approach is to use an incremental step function whereby the error function is evaluated from a low value of Θ to a high value of Θ (e.g., -3 to +3 degrees) in small steps (of 0.1 degrees), with the correct value being the one that gives the lowest error function value. A coarse angle step may be used initially to estimate approximate the Θ value at which the minimum error function value occurs and then a fine angle step used to refine this estimate further. However, other types of numerical analysis can be used to find Θ, including the bisection, Newton-Raphson, finite difference, gradient descent or other interpolation methods. It is found that by using the described invention, typical angle errors are lower than prior art methods and thus the current invention is seen to provide a faster and more accurate solution than any previously reported method.

At step 714, an inter-frame rotation angle Θ is estimated between the known number of frames, corresponding to the minimum error function. The inter-frame rotation angle is the rotation angle per inter-frame interval. Further, the yaw-rate of the vehicle may be estimated using the recorded value for the inter-frame rate ($FPS_I$). Using the calculated yaw rate, measured velocity and recorded frame rate, the ego-vehicle offset location from the previously calculated, arbitrarily set, or measured location, is calculated and the new ego-vehicle position is updated. This process is repeated until location measurements (from a GNSS receiver) can be made again or the journey ends.

In an embodiment of the present invention, two approaches for reducing yaw rate estimation noise may be used in alignment with the described invention. Both may be used separately or concurrently. The first approach calculates the yaw angle by comparing the point cloud with a window of frames, rather than just the previous frame; for instance a window of five frames could be used, with the limit on a realistic window size being the processing time required and the difficulty in achieving good correspondence between the hypothesis and current point clouds if the window size is too large, i.e., if features within the scene change too significantly within the window time. The inter-frame rotation angle for each comparison within the window may be normalised to a per-frame rotation angle and the calculated values for this within the window averaged. The second approach uses a digital filter such as a constant-velocity model Kalman filter (where the object is assumed to move with a nearly constant velocity) to reduce these calculation errors. In the Kalman filter model, four parameters may be used to represent the position and velocity in the X and Y dimensions. The calculated x and y components of velocity, derived from the velocity magnitude and yaw rate calculations, may be used to compare with predicted values. Those familiar in the field may appreciate that the choice of Kalman filter parameters such as spectral density and x/y velocity standard deviation may determine the performance of the filter and is dependent on the application and the type of sensor used, so these details are not discussed here.

In a further application of the method, the combined spatial translation and rotational transformation matrix for a rotation around the Y-axis is given as:

$$T_y = \begin{bmatrix} cos(\varnothing) & 0 & -sin(\varnothing) & Z_x \\ 0 & 1 & 0 & Z_y \\ sin(\varnothing) & 0 & cos(\varnothing) & Z_z \\ 0 & 0 & 0 & 1 \end{bmatrix} \quad \ldots\ldots\ldots\ldots\ldots(17)$$

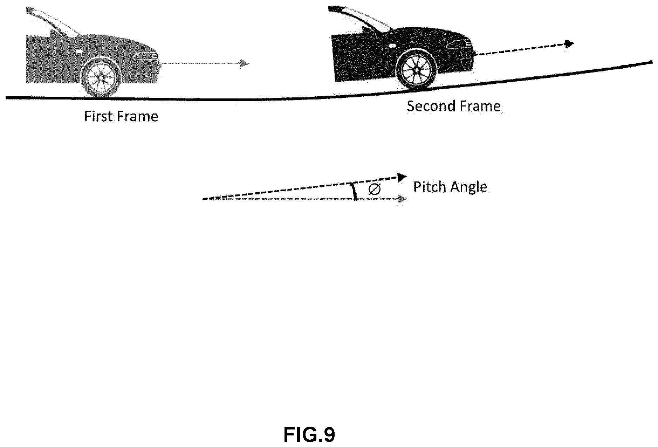

where $\varnothing$ is the rotation angle around the Y axis and equates to the pitch of the ego-vehicle. Having previously completed the transformation in the XY plane using equation (16), the transformation in the XZ plane can be further applied to estimate if the pitch of the vehicle has changed e.g. by climbing a hill, (as shown in FIG.9). Since this new transformation, $T_y$ may be applied to the transformed point cloud after applying the initial transformation matrix, $T_z$, any spatial movement in the XY plane has already been applied, meaning that the further transformation matrix $T_y$ can be rewritten as:

$$T_y = \begin{bmatrix} cos(\varnothing) & 0 & -sin(\varnothing) & 0 \\ 0 & 1 & 0 & 0 \\ sin(\varnothing) & 0 & cos(\varnothing) & -\frac{v}{FPS}cos(\theta)\,sin(\varnothing) \\ 0 & 0 & 0 & 1 \end{bmatrix} \quad \cdots \cdots$$

(18)

where $\Theta$ is the previously calculated yaw angle and $\varnothing$ is calculated using the same process as before.

Alternatively, it is possible to rewrite equation (16) to incorporate both Z axis and Y axis rotations, so that the transformation matrix $T_2$ can be rewritten as:

$$T = T_z T_y =$$

$$\begin{bmatrix} cos(\theta)\,cos(\varnothing) & -sin(\theta) & -cos(\theta)sin(\varnothing) & -\frac{v}{FPS}cos(\theta) \\ sin(\theta)\,cos(\varnothing) & cos(\theta) & -sin(\theta)\,sin(\varnothing) & -\frac{v}{FPS}sin(\theta) \\ sin(\varnothing) & 0 & cos(\varnothing) & -\frac{v}{FPS}cos(\theta)\,sin(\varnothing) \\ 0 & 0 & 0 & 1 \end{bmatrix}$$

...(19)

Applying equations (19) to transform the point clouds using the same approach as previously described gives:

$$\begin{bmatrix} x' \\ y' \\ z' \\ 1 \end{bmatrix} = T \begin{bmatrix} x \\ y \\ z \\ 1 \end{bmatrix} \quad \cdots\cdots\cdots\cdots$$

(20)

In this approach the values for $\Theta$ and $\varnothing$ can be found by using prior art numerical methods, with the 2D incremental step approach used here, where each stepped value of $\Theta$ is used to calculate each of the stepped values across the range of $\varnothing$, with coarse step used initially and a fine step used as the solution nears, to form a 2D matrix of calculated error functions where the minimum value corresponds to the calculated values for $\Theta$ and ø. It is noted here that the method chosen is independent of the current invention and does not restrict it in any way.

It is noted that this calculated pitch angle, as in the case of the yaw angle, only refers to the change in pitch between the first and second point clouds. Thus, the calculation should be referenced to the previous pitch angle, along with all other pitch angle calculations from the last known pitch angle. Thus, the current pitch angle deviation from the last known pitch angle, will be the sum of each of the previous pitch angle calculations from the last known pitch angle.

In an alternative embodiment of the invention, rather than determining the ego-vehicle yaw rate by transforming/comparing individual point cloud frames within a window of frames, the point cloud may be accumulated across the window of frames with calculated ego-velocity (from Kellner et al method) and a parameterised yaw rate value (which can be swept through a defined range of angles); the error function value for the optimisation is in this case the number of occupied pixels in the accumulated point cloud image across a window of frames. This makes use of how the accumulated point cloud 'smears' when an incorrect yaw rate is applied during the accumulation. One limitation of those method is that it assumes a constant yaw rate across the accumulated window of frames so depending on the ego-vehicle speed this may not be valid and hence the method may be more suited to situations with slow ego-vehicles, such as in robotics applications like mining.

In the specification the terms "comprise, comprises, comprised and comprising" or any variation thereof and the terms include, includes, included and including" or any variation thereof are considered to be interchangeable, and they should all be afforded the widest possible interpretation and vice versa.

The invention is not limited to the embodiments hereinbefore described but may be varied in both construction and detail.

**Claims**

1. A method for estimating angular movement of an ego-vehicle, the method comprising:

measuring and recording radar point clouds of observed detections of static points from a pair of consecutive frames including a previous and a current frame;
transforming the radar point cloud from the previous frame to that of the current frame using a transformation matrix, to generate a transformed point cloud, wherein the radar point cloud of the current frame is a current point cloud;
converting the transformed point cloud and the current point cloud to corresponding images with pixels that have a signal-to-noise level greater than a predefined level;
comparing the images with their differences numerically evaluated, to generate a first error function;
adjusting a rotation angle in the transformation matrix till the first error function is minimized; and
estimating an inter-frame rotation angle between the consecutive frames, based on the minimized first error function.

2. The method as claimed in claim 1, wherein the transformation matrix includes a single variable as yaw angle or rotation angle about the z-axis, by setting the displacement of the ego-vehicle along x and y axes, in terms of frame rate, detected velocity of the ego-vehicle, and yaw or rotation angle about the z-axis.

3. The method as claimed in claim 2, further comprising:

further translating the transformed point cloud using a second transformation matrix, wherein the second transformation matrix includes a single variable as pitch angle or rotation about the y-axis, by setting the displacement of the ego-vehicle along x and z axes, in terms of the frame rate, detected velocity and pitch angle or rotation about the y-axis;
converting the further transformed point cloud and the current point cloud to corresponding images with pixels that have a signal-to-noise level larger than a predefined level;
comparing the images with their differences numerically evaluated, to generate a second error function;
minimising the second error function by adjusting the pitch angle or rotation angle about the y-axis for the estimated pitch angle; and
estimating the pitch angle or rotation about the y-axis based on the minimized second error function.

4. The method as claimed in any preceding claim, wherein the magnitude of the difference between the pixels of two images are summed to generate first or second error functions.

5. The method as claimed in claim 1, wherein the transformation matrix is generated based on two variables of pitch and yaw angles, and the first error function includes a 2-dimensional error matrix that is minimized by adjustment of both the yaw and pitch angles.

6. The method as claimed in claim 5, wherein the displacements in x, y and z axes in the transformation matrix are set in terms of the frame rate, yaw angle, pitch angle and detected velocity.

7. The method as claimed in any preceding claim wherein an offset number k of frames is used and k is greater than 1.

8. The method as claimed in any preceding claim further comprising applying a digital filter to the transformed point cloud or further transformed point cloud to reduce the point cloud noise.

9. The method as claimed in preceding claim, wherein the detected velocity is the unambiguous velocity.

10. The method as claimed in claim 1, wherein the rotation angle is one of: pitch angle or yaw angle.

11. A system for estimating angular movement of an ego-vehicle, the system comprising:

a memory to store one or more instructions; and
a processor to execute the one or more instructions to:

measure and record radar point clouds of observed detections of static points from a pair of consecutive frames including a previous and a current frame;

transform the radar point cloud from the previous frame to that of the current frame using a transformation matrix, to generate a transformed point cloud, wherein the radar point cloud of the current frame is a current point cloud;

convert the transformed point cloud and the current point cloud to corresponding images with pixels that have a signal-to-noise level greater than a predefined level;

compare the images with their differences numerically evaluated, to generate a first error function;

adjust a rotation angle in the transformation matrix till the first error function is minimized; and

estimate an inter-frame rotation angle between the consecutive frames, based on the minimized first error function.

Radar Point Cloud

**FIG. 1**

.......... Transmitted Chirp

— — — Received Chirp

Beat Frequency

Frequency

Time

FFT (Range)

FFT (Velocity)

**FIG. 2**

**FIG. 3**

Translation Vector

Transformed
Point Cloud

Original Point
Cloud

FIG. 4

FIG. 5

FIG.6

FIG.8

START

Measure and record radar point clouds of observed detections of static points from a known number of consecutive frames —702

Transform radar point cloud from a known earlier frame to that of a current frame using a transformation matrix with given rotation angle —704

Convert the transformed point cloud and the current point cloud to corresponding digital images —706

Compare the digital images with their differences numerically evaluated, to generate an error function —708

Is error function minimum? —710

No → Adjust rotation angle —712 → No

Yes

Estimate an inter-frame rotation angle between the known number frames, based on the minimised error function —714

STOP

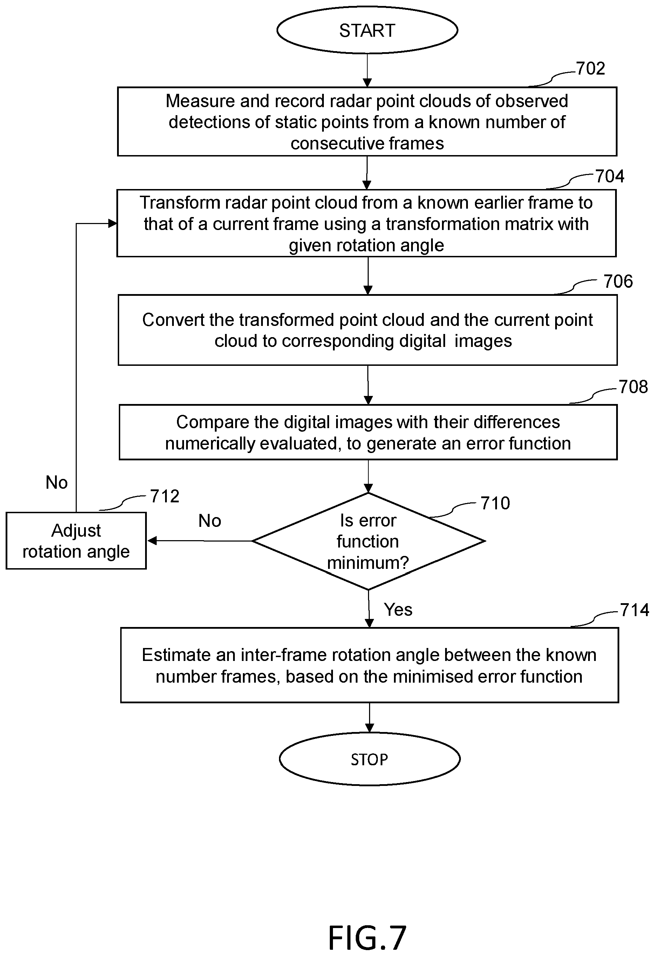

FIG.7

First Frame

Second Frame

∅ Pitch Angle

**FIG.9**

**EUROPEAN SEARCH REPORT**

Europäisches Patentamt
European Patent Office
Office européen des brevets

**Application Number**

EP 23 21 2929

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Monaco Christopher D: "Ego-Motion Estimation from Doppler and Spatial Data in Sonar, Radar, or Camera Images", , 31 December 2019 (2019-12-31), XP093069016, ISBN: 979-8-8193-9286-7 Retrieved from the Internet: URL:https://www.proquest.com/docview/2674697659?pq-origsite=gscholar&fromopenview=true [retrieved on 2023-07-31] * pages 35, 38, 39, 40, 41, 43; equation 5.7; figure 5.1 * | 1-11 | INV. G01S13/34 G01S13/58 G01S13/60 G01S13/89 G01S13/931 |
| A | LU CHRIS XIAOXUAN ET AL: "milliEgo single-chip mmWave radar aided egomotion estimation via deep sensor fusion", PROCEEDINGS OF THE 2020 ACM SIGSIM CONFERENCE ON PRINCIPLES OF ADVANCED DISCRETE SIMULATION, ACMPUB27, NEW YORK, NY, USA, 16 November 2020 (2020-11-16), pages 109-122, XP058728476, DOI: 10.1145/3384419.3430776 ISBN: 978-1-4503-7592-4 * page 113 * | 1-11 | |
| A | US 2014/376821 A1 (MEIR NOAM [IL] ET AL) 25 December 2014 (2014-12-25) * paragraphs [0009], [0015], [0047], [0079]; figure 5 * | 1-11 | |

TECHNICAL FIELDS SEARCHED (IPC)

G01S

-/--

The present search report has been drawn up for all claims

| Place of search | Date of completion of the search | Examiner |
|---|---|---|
| Munich | 15 May 2024 | Kirscher, Jérôme |

EPO FORM 1503 03.82 (P04C01)

page 1 of 2

Europäisches
Patentamt

European
Patent Office

Office européen
des brevets

## EUROPEAN SEARCH REPORT

**Application Number**

EP 23 21 2929

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BARJENBRUCH MICHAEL ET AL: "Joint spatial- and Doppler-based ego-motion estimation for automotive radars", 2015 IEEE INTELLIGENT VEHICLES SYMPOSIUM (IV), IEEE, 28 June 2015 (2015-06-28), pages 839-844, XP033209780, DOI: 10.1109/IVS.2015.7225789 [retrieved on 2015-08-26] * page 841 – page 843; figure 2 * ----- | 1-11 | |
| A | US 2022/144305 A1 (REN YUAN [CA] ET AL) 12 May 2022 (2022-05-12) * paragraphs [0008], [0128]; figures 6,7,12 * ----- | 1-11 | |

| | | | TECHNICAL FIELDS SEARCHED (IPC) |
|---|---|---|---|

The present search report has been drawn up for all claims

| Place of search | Date of completion of the search | Examiner |
|---|---|---|
| Munich | 15 May 2024 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 21 2929**

This annex lists the patent family members relating to the patent documents cited in the above-mentioned European search report.
The members are as contained in the European Patent Office EDP file on
The European Patent Office is in no way liable for these particulars which are merely given for the purpose of information.

**15-05-2024**

| Patent document cited in search report | Publication date | Patent family member(s) | | Publication date |
|---|---|---|---|---|
| US 2014376821 A1 | 25-12-2014 | US | 2014376821 A1 | 25-12-2014 |
| | | WO | 2013069012 A1 | 16-05-2013 |
| US 2022144305 A1 | 12-05-2022 | EP | 4038416 A1 | 10-08-2022 |
| | | JP | 7358636 B2 | 10-10-2023 |
| | | JP | 2022553248 A | 22-12-2022 |
| | | US | 2021116914 A1 | 22-04-2021 |
| | | US | 2022144305 A1 | 12-05-2022 |
| | | WO | 2021073165 A1 | 22-04-2021 |

EPO FORM P0459

For more details about this annex : see Official Journal of the European Patent Office, No. 12/82